# EUROPÄISCHE PATENTSCHRIFT

(11) **EP 0 560 058 B1**
(45) Veröffentlichungstag und Bekanntmachung des Hinweises auf die Patenterteilung: **26.03.1997**
(21) Anmeldenummer: 93101889.9
(22) Anmeldetag: 06.02.1993
(51) Int. Cl.: F16D 3/32

(54) **Zentriertes Doppelgelenk für Lenkwellen in Kraftfahrzeugen**
Centred double joint for articulated shafts in vehicles
Joint double à votule pour arbres articulés de véhicules

(30) Priorität: 07.03.1992 DE 4207218
(43) Veröffentlichungstag der Anmeldung: 15.09.1993
(73) Patentinhaber: LEMFOERDER METALLWAREN AG., D-49441 Lemförde (DE)
(72) Erfinder: Schäfer, Burkhard, Dipl.-Ing., W-2844 Lemförde (DE); Gross-Kohorst, Berthold, Dipl.-Ing., W-2842 Lohne (DE)

(56) Entgegenhaltungen:
- EP-A- 0 011 159
- EP-A- 0 245 645
- DE-C- 664 786
- FR-A- 717 790
- FR-A- 1 156 470
- FR-A- 1 486 469
- FR-A- 2 013 712
- FR-E- 89 051
- GB-A- 377 760
- GB-A- 414 923
- GB-A- 1 001 316
- GB-A- 2 014 276
- US-A- 1 898 265
- US-A- 2 133 176

## Beschreibung

Die Erfindung betrifft ein Doppelkreuzgelenk für Lenkwellen in Kraftfahrzeugen nach dem Oberbegriff des Patentanspruches 1.

Diese Gattungsmerkmale sind aus der GB-A-1 001 316 bekannt. Darin wird ein zentriertes Doppelkreuzgelenk für Lenkwellen in Kraftfahrzeugen beschrieben, bei dem die in dem Gelenk drehfest miteinander verbundenen Wellenenden jeweils in einem Gelenkkreuz um zwei einen rechten Winkel miteinander und mit der Wellenlängsachse einschließende Gelenkachsen in einem beide Gelenkkreuze miteinander verbindenden Gehäuse aus einem Rohrstück mittels Lagerzapfen beweglich gelagert sind und jedes der beiden Gelenkkreuze in einem das zugehörige Wellenende mit einem radialen Abstand umschließenden Ring ausgebildet ist, in welchem das Wellenende um die in einer Gelenkachse angeordneten Zapfen beweglich gelagert ist, worin die beiden Wellenenden zwischen den beiden Kreuzgelenken durch ein Kugelgelenk miteinander verbunden und zentriert sind, deren Gelenkkugel auf einem axialen Zapfen des einen Wellenendes gleitend beweglich angeordnet und deren die Gelenkkugel wenigstens teilweise umschließendes Schalengehäuse an dem anderen Wellenende fest angeordnet ist, wobei die Zapfen mittels Wälzlager in Lagerbuchsen eingesetzt und wenigstens teilweise von einem elastischen Werkstoff umgeben sind.

Aus der DE 39 21 242 -C1- ist ein zentriertes Doppelkreuzgelenk an sich bekannt. Bei der bekannten Anordnung ist jeweils eine von zwei Gelenkkreuzen um die eine Gelenkkreuzachse beweglich mit einer Gabel an einem der beiden Wellenenden und um die andere Gelenkachse mit einer Gabel an einem Verbindungsflansch verbunden. Die Mittenzentrierung erfolgt durch eine Gelenkverbindung beider Wellenenden innerhalb des Verbindungsflansches aus einer metallischen Gelenkkugel an dem einen Wellenende und einem zylindrischen, ebenfalls metallischen Gehäuse an dem anderen Wellenende, in welches die Gelenkkugel radial spielfrei, aber axial beweglich eingreift. Der Verbindungsflansch und die beiden an ihm ausgebildeten Gabeln sind einstückig aus Metall hergestellt, wobei ein innerer Hohlraum den Freiraum für die Bewegung der zentrierenden Gelenkverbindung schafft und in seiner Größe auf den maximalen Winkelausschlag der beiden Wellenenden gegenüber der gestreckten Mittelachse abgestimmt ist. Zur Erzielung einer größeren Leichtgängigkeit sind die Enden der beiden Gelenkkreuze mit Wälzlagern in Bohrungen der Gabelarme gelagert. Über Schmiermittelkanäle kann den Lagerstellen Schmiermittel zugeführt werden. Ein solches Doppelkreuzgelenk mit Mittenzentrierung ist auch durch die FR-PS 24 02 803 bekannt geworden.

Aus der FR-A-2 526 101 ist ein zentriertes Doppelkreuzgelenk bekannt, bei dem der Verbindungsflansch, an dem die einen Gelenkgabeln ausgebildet sind, aus zwei konzentrisch ineinander angeordneten Hülsen und einer elastischen Einlage besteht, durch die die beiden Hülsen drehfest miteinander verbunden sind, so daß diese elastische Einlage aus Kunststoff oder einem anderen Elastomer Schwingungen in dem einen Wellenende von dem anderen Wellenende abkoppelt. Elastische Lagerwerkstoffe für die Lagerstellen in zentrierten Doppelkreuzgelenken sind auch aus der EP-A-0 011 159 bekannt. Die Verwendung eines elastischen Werkstoffes in der Lagerstelle des Zentrierungsgelenks ist andererseits aus der FR-E 89 051 bekannt.

Aufgabe der Erfindung ist die kostengünstige, leicht montierbare Ausbildung eines zentrierten Doppelkreuzgelenks, welches bevorzugt mit einer optimierten Schwingungsdämpfung zur Abkopplung von Schwingungen zwischen beiden Wellenenden und zur Reduzierung des Körperschalls im Innenraum eines Kraftfahrzeugs ausgestattet werden kann.

Die Lösung dieser Aufgabe besteht darin, daß ein zentriertes Doppelkreuzgelenk die Ausbildungsmerkmale nach dem Patentanspruch 1 aufweist.

Dadurch wird der Einbau von wirkungsvollen Mitteln von Schwingungsdämpfung erleichtert und die Herstellung des Kreuzgelenkes wesentlich vereinfacht. Im wesentlichen besteht das neue Doppelkreuzgelenk aus zwei durch koaxial angeordnete Zapfen jeweils mit einem der beiden Wellenenden verbundenen Ringen und aus einem beide Ringe übergreifenden Rohrstück, mit dem die Ringe ebenfalls durch je zwei koaxial angeordnete Zapfen verbunden sind. Alle diese Lagerzapfen können bei der Montage radial von außen durch Bohrungen der Ringe bzw. des Rohrstückes leicht eingesetzt werden und ermöglichen somit eine leichte und schnelle Montage, aber auch die leichte Montage von Dämpfungsmitteln zur Schwingungsentkopplung.

Andere vorteilhafte Ausbildungsmerkmale des Erfindungsgegenstandes enthalten die Ansprüche 2 bis 5.

Auf der Zeichnung ist ein Ausführungsbeispiel der Erfindung dargestellt. Es zeigen:
- Figur 1: einen Längsschnitt durch das gestreckte Gelenk in einer Achsebene,
- Figur 2: den gleichen Schnitt eines eingeknickten Gelenks,
- Figur 3: einen gegenüber der Figur 1 um 90° versetzten Längsschnitt,
- Figur 4: einen Schnitt ensprechend Figur 3 eines eingeknickten Gelenks und

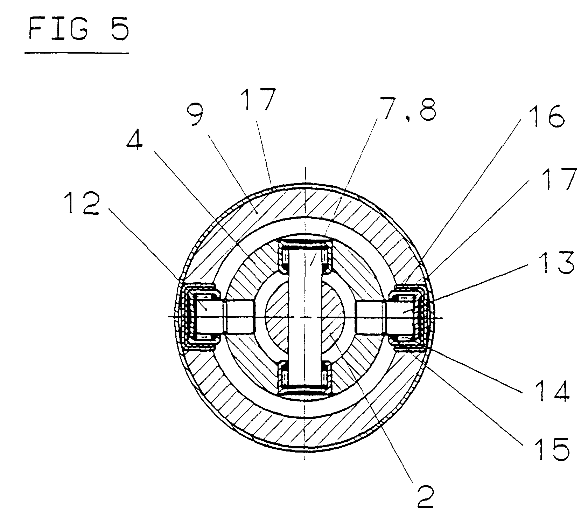

- Figur 5: einen Schnitt nach der Linie V - V in Figur 1.

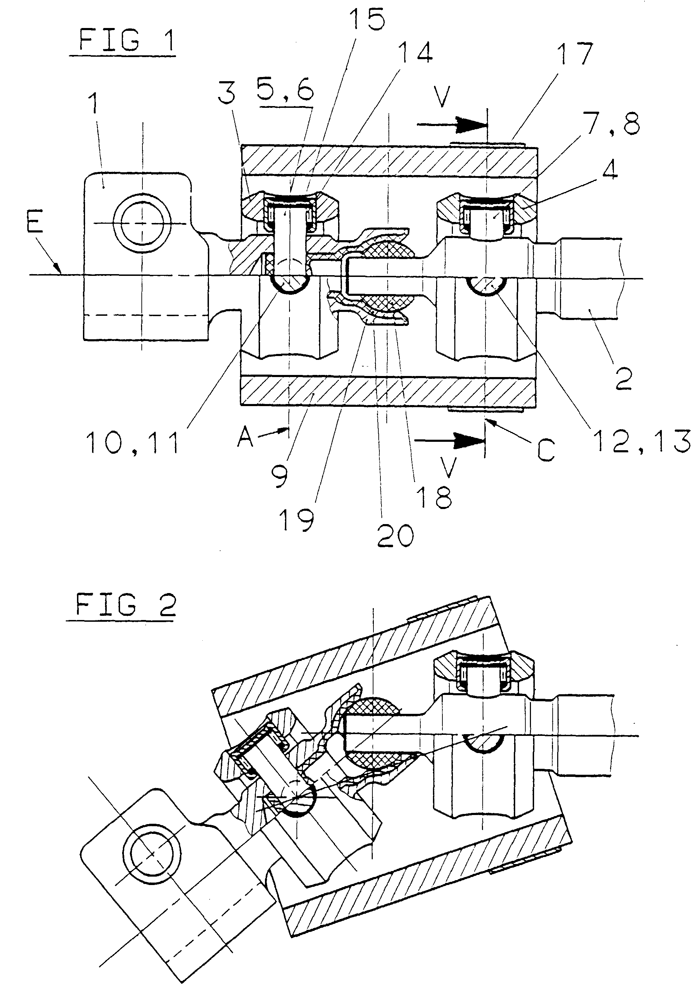

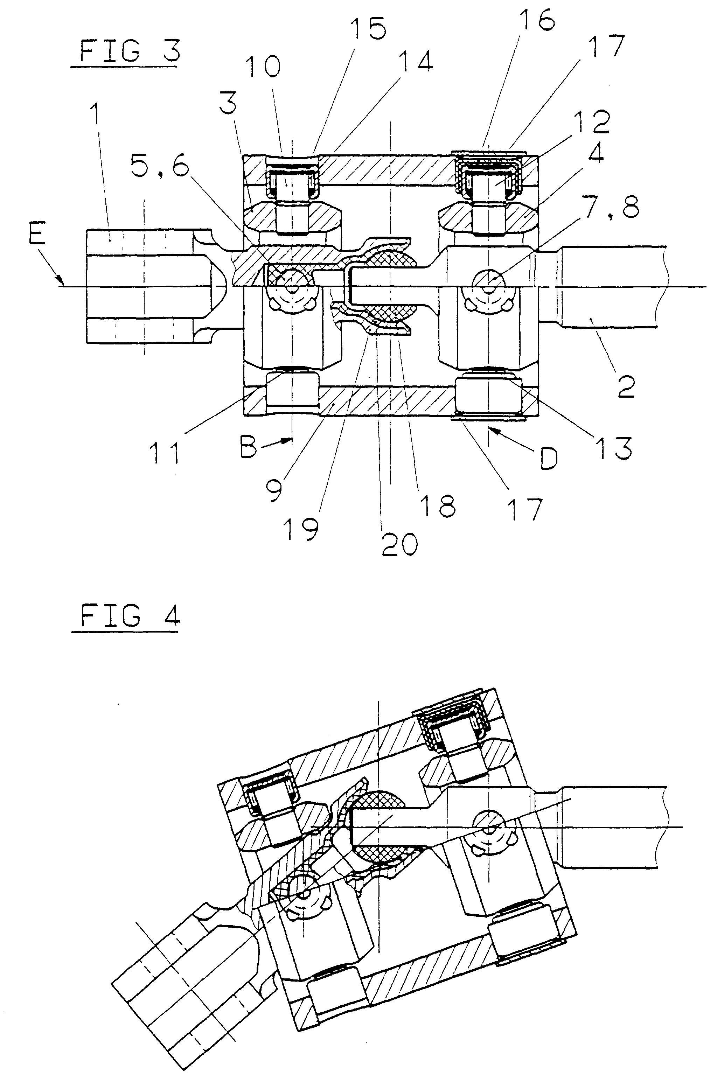

Bei dem Doppelkreuzgelenk nach der Erfindung können die Enden der beiden durch das Gelenk miteinander zu verbindenden Wellenenden ohne Gelenkgabeln beispielsweise zapfenförmig ausgebildet sein. Beide Wellenenden 1 und 2 greifen mit einem erheblichen Radialspiel in einen Ring 3 bzw. 4 ein und sind mit diesem an zwei sich diametral gegenüberliegenden Stellen durch zwei koaxial in der Gelenkachse A des einen Gelenkkreuzes angeordnete Zapfen 5 und 6 bzw. durch zwei koaxial in der Gelenkachse C des anderen Gelenkkreuzes angeordnete Zapfen 7 und 8 drehfest verbunden, wobei diese Zapfen 5 und 6 bzw. 7 und 8 auch als ein durchgehender Bolzen ausgebildet sein können. Beide Ringe 3 und 4 sind in die Enden eines ein Gehäuse bildenden Rohrstückes 9 eingesetzt und mit diesem Rohrstück 9 entsprechend der Darstellung in den Figuren 3 und 4 ebenfalls an zwei sich diametral gegenüberliegenden Stellen durch zwei koaxial in der zweiten Gelenkachse B des einen Gelenkkreuzes angeordnete Zapfen 10 und 11 bzw. durch zwei koaxial in der zweiten Gelenkachse D des anderen Gelenkkreuzes angeordnete Zapfen 12 und 13 drehfest verbunden, wobei die Gelenkachsen A und B bzw. C und D (Fig. 1 und 3) jedes Gelenkkreuzes miteinander und mit der gestreckten Längsachse E des Doppelkreuzgelenks einen rechten Winkel einschließen. Alle Zapfen 5 bis 8 und 10 bis 13 sind mittels Wälzlager 14, insbesondere Nadellager, in einer Lagerbuchse 15 gelagert, die in die entsprechende Bohrung der Ringe 3 und 4 bzw. des Rohrstückes 9 bei der Montage radial von außen eingesetzt sind, wodurch die Montage erheblich erleichtert wird. Die Lagerbuchsen 15 sind wenigstens teilweise von einem elastischen Werkstoff umgeben. Wenigstens zwei der in radiale Bohrungen des Rohrstückes 9 eingesetzten Lagerbuchsen 15 sind bei dem Ausführungsbeispiel in topfförmigen Aufnahmebuchsen 16 angeordnet, die in die Bohrung des Rohrstückes 9 eingesetzt sind und durch eine Manschette 17 mit Eigenspannung oder mit nicht dargestellten Klemmitteln gehalten werden. Eine solche Lagerung kann an allen Lagerstellen gleichermaßen vorgesehen sein. In Abweichung davon können auch die Lagerbuchsen 15 der Wälzlager 14 aus einem elastischen Werkstoff bestehen, insbesondere wenn keine hohen Lagerbelastungen zu erwarten sind.

Die Zentrierung des Doppelkreuzgelenkes erfolgt in an sich bekannter Weise durch ein Verbindungsgelenk aus einer mit dem einen Wellenende 2 innerhalb des Rohrstückes 9 verbundenen Gelenkkugel 18 aus Kunststoff, welche in ein Schalengehäuse 19 an dem anderen Wellenende 1 eingreift, die ebenfalls eine Auskleidung 20 aus einem elastischen Kunststoff aufweist, so daß keine Schwingungen von dem einen Wellenende auf das andere Wellenende übertragen werden.

### BEZUGSZEICHENLISTE:

- 1: Wellenende
- 2: Wellenende
- 3: Ring
- 4: Ring
- 5: Zapfen
- 6: Zapfen
- 7: Zapfen
- 8: Zapfen
- 9: Rohrstück
- 10: Zapfen
- 11: Zapfen
- 12: Zapfen
- 13: Zapfen
- 14: Wälzlager
- 15: Lagerbuchse
- 16: Aufnahmebuchse
- 17: Manschette
- 18: Gelenkkugel
- 19: Schalengehäuse
- 20: Auskleidung

## Patentansprüche

1. Zentriertes Doppelkreuzgelenk für Lenkwellen in Kraftfahrzeugen, bei dem die in dem Gelenk drehfest miteinander verbundenen Wellenenden (1,2) jeweils in einem Gelenkkreuz um zwei einen rechten Winkel miteinander und mit der Wellenlängsachse (E) einschließende Gelenkachsen (A,B und C,D) in einem beide Gelenkkreuze miteinander verbindenden Gehäuse (9) aus einem Rohrstück mittels Lagerzapfen (10,11 und 12,13) beweglich gelagert sind und jedes der beiden Gelenkkreuze in einem das zugehörige Wellenende (1,2) mit einem radialen Abstand umschließenden Ring (3,4) ausgebildet ist, in welchem das Wellenende (1,2) um die in einer Gelenkachse angeordneten Zapfen (5,6 und 7,8) beweglich gelagert ist, wobei die beiden Wellenenden (1,2) zwischen den beiden Kreuzgelenken durch ein Kugelgelenk (18,19) miteinander verbunden und zentriert sind, deren Gelenkkugel (18) auf einem axialen Zapfen des einen Wellenendes (2) gleitend beweglich angeordnet und deren die Gelenkkugel (18) teilweise umschließendes Schalengehäuse (19) an dem anderen Wellenende (1) fest angeordnet ist und wobei die Zapfen (5,6 und 7,8) mittels Wälzlager in Lagerbuchsen eingesetzt und wenigstens teilweise von einem elastischen Werkstoff umgeben sind, dadurch gekennzeichnet, daß die Gelenkkugel (18) aus Kunststoff besteht und daß das Schalengehäuse (19) eine Auskleidung aus elastischem Kunststoff aufweist.

2. Zentriertes Doppelkreuzgelenk nach Anspruch 1, dadurch gekennzeichnet, daß die Zapfen /5 bis 8 und 10 bis 13) in einer radialen Bohrung des jeweils äußeren Teils mittels eines in einer Lagerbuchse (15) eingesetzten Nadellagers (Wälzlager 14) gelagert sind.

3. Zentriertes Doppelkreuzgelenk nach den Ansprüchen 1 und 2, dadurch gekennzeichnet, daß die Zapfen (5 bis 8 und 10 bis 13) in dem jeweils inneren Teil fest angeordnet und durch eine radiale Bohrung des diesen inneren Teil umgebenden äußeren Teils eingesetzt sind.

4. Zentriertes Doppelkreuzgelenk nach den Ansprüchen 1 bis 3, dadurch gekennzeichnet, daß die beiden den Ring (3,4) mit dem zugehörigen Wellenende (1,2) verbindenden Zapfen (5 bis 8) durch einen durchgehenden Bolzen gebildet sind.

5. Zentriertes Doppelkreuzgelenk nach den Ansprüchen 1 bis 4, dadurch gekennzeichnet, daß die radial verlaufenden Bohrungen des das Gehäuse bildenden Rohrstückes (9) durch eine aufgesetzte Manschette (17) abgedeckt sind.

## Claims

1. A centred double universal joint for steering shafts in motor vehicles, in which the shaft ends (1, 2), which are torsionally rigidly connected to one another in the joint, are mounted by means of bearing journals (10, 11 and 12, 13) in each case in a universal joint so as to be movable about two joint axes (A, B and C, D) forming a right angle with one another and with the shaft longitudinal axis (E) in a housing (9) which connects the two universal joints and is formed by a tube element, and each of the two universal joints is constructed in a ring (3, 4) enclosing the associated shaft end (1, 2) with radial clearance, the shaft end (1, 2) being mounted in said ring (3, 4) so as to be movable about the journals (5, 6 and 7, 8) arranged in a joint axis, the two shaft ends (1, 2) being connected to one another and centred between the two universal joints by a ball-and-socket joint (18, 19), the joint ball (18) being arranged to slide on an axial journal of one shaft end (2) and the shell housing (19) partially enclosing the joint ball (18) being fixedly arranged on the other shaft end (1), the journals (5, 6, and 7, 8) being inserted by means of roller bearings in bearing bushes and being at least partially enclosed by an elastic material, characterised in that the joint ball (18) is made of plastics material and the shell housing (19) comprises a lining of elastic plastics material.

2. A centred double universal joint according to claim 1, characterised in that the journals (5 to 8 and 10 to 13) are mounted in a radial bore of the respective outer part by means of a needle bearing (roller bearing 14) fitted in a bearing bush (15).

3. A centred double universal joint according to claims 1 and 2, characterised in that the journals (5 to 8 and 10 to 13) are fixedly arranged in the respective inner part and are inserted through a radial bore of the outer part enclosing said inner part.

4. A centred double universal joint according to claims 1 to 3, characterised in that the two journals (5 to 8) connecting the ring (3, 4) with the associated shaft end (1, 2) are formed by a continuous bolt.

5. A centred double universal joint according to claims 1 to 4, characterised in that the radially extending bores of the tube element (9) forming the housing are covered by a fitted sleeve (17).

## Revendications

1. Double joint de Cardan centré, pour arbre articulé de véhicule automobile, dans lequel les bouts d'arbre (1, 2), reliés l'un à l'autre d'une manière fixe en rotation dans le joint, sont montés mobiles chacun dans un croisillon de joint au moyen de tourillons (10, 11 et 12, 13), dans un boîtier (9) formé d'un tronçon de tube et reliant l'un à l'autre les deux croisillons de joint, autour de deux axes d'articulation (A, B et C, D) qui font un angle droit entre eux et avec l'axe longitudinal d'arbre (E), et chacun des deux croisillons de joint est réalisé dans un anneau (3, 4) qui entoure le bout d'arbre (1, 2) associé avec un espacement radial et dans lequel le bout d'arbre (1, 2) est monté mobile autour des tourillons (5, 6 et 7, 8) disposés suivant un axe d'articulation, tandis qu'entre les deux croisillons, les deux bouts d'arbre (1, 2) sont reliés l'un à l'autre et centrés au moyen d'une articulation à rotule (18, 19) dont la rotule d'articulation (18) est disposée coulissante sur un tourillon axial de l'un (2) des bouts d'arbre et dont le boîtier en forme de coquille (19) qui entoure partiellement la rotule d'articulation (18) est disposé d'une manière fixe sur l'autre bout d'arbre (1), les tourillons (5, 6 et 7, 8) étant montés au moyen de roulements dans des coussinets et étant entourés au moins partiellement au moyen d'une matière élastique, caractérisé en ce que la rotule d'articulation (18) est constituée de matière plastique et en ce que le boîtier en forme de coquille (19) comporte un revêtement et une matière élastique.

2. Double joint de Cardan centré, caractérisé en ce que les tourillons (5 à 8 et 10 à 13) sont montés dans un alésage radial de la pièce extérieure respective au moyen d'un roulement à aiguilles (roulement 14) monté dans un coussinet (15).

3. Double joint de Cardan centré selon les revendications 1 et 2, caractérisé en ce que les tourillons (5 à 8 et 10 à 13) sont disposés d'une manière fixe dans la pièce intérieure respective et sont montés de façon à traverser un alésage radial de la pièce extérieure entourant cette pièce intérieure.

4. Double joint de Cardan centré selon les revendications 1 à 3, caractérisé en ce que les deux tourillons (5 à 8) reliant l'anneau (3, 4) au bout d'arbre (1, 2) associé sont formés d'un tronçon de tige continu.

5. Double joint de Cardan centré selon les revendications 1 à 4, caractérisé en ce que les alésages radiaux du tronçon de tube (9) formant le boîtier sont recouverts au moyen d'un manchon (17) rapporté.
